(19) Europäisches Patentamt
European Patent Office
Office européen des brevets

(11) **EP 1 731 635 B1**

(12) **EUROPEAN PATENT SPECIFICATION**

(45) Date of publication and mention
of the grant of the patent:
**10.10.2012 Bulletin 2012/41**

(21) Application number: **05727574.5**

(22) Date of filing: **30.03.2005**

(51) Int Cl.:
***D01F 9/127*** *(2006.01)*    ***C01B 31/02*** *(2006.01)*

(86) International application number:
**PCT/JP2005/006085**

(87) International publication number:
**WO 2005/095687 (13.10.2005 Gazette 2005/41)**

(54) **MICROSCOPIC CARBON FIBER WITH A VARIETY OF STRUCTURES**

MIKROSKOPISCHE CARBONFASER MIT VERSCHIEDENSTEN GEFÜGEN

FIBRE DE CARBONE MICOSCOPIQUE AVEC UNE VARIETE DE STRUCTURES

(84) Designated Contracting States:
**AT BE BG CH CY CZ DE DK EE ES FI FR GB GR HU IE IS IT LI LT LU MC NL PL PT RO SE SI SK TR**

(30) Priority: **31.03.2004 JP 2004103083**
**15.09.2004 JP 2004268878**
**30.11.2004 JP 2004347384**

(43) Date of publication of application:
**13.12.2006 Bulletin 2006/50**

(73) Proprietor: **Hodogaya Chemical Co., Ltd.**
**Tokyo 105-0011 (JP)**

(72) Inventors:
• **ENDO, Morinobu,**
**Shinshu Univ., Fac. of Engineering**
**Nagano-shi, Nagano 3808553 (JP)**

• **TSUKADA, Takayuki,**
**Bussan Nanotech Rsch. Inst. Inc**
**Tokyo 1000004 (JP)**
• **MUNEKANE, Fuminori,**
**Bussan Nanotech Rsch. Inst.Inc**
**Tokyo 1000004 (JP)**
• **OSATO, Kazuhiro,**
**Bussan Nanotech Rsch. Inst. Inc.**
**Tokyo 1000004 (JP)**

(74) Representative: **Giovannini, Francesca et al**
**Osha Liang**
**32, avenue de l'Opéra**
**75002 Paris (FR)**

(56) References cited:
**WO-A-2004/099477    WO-A-2005/023937**
**WO-A1-01/77423    JP-A- 2003 524 516**
**JP-A- 2004 003 097    JP-A- 2004 143 652**

EP 1 731 635 B1

**Description**

**TECHNICAL FIELD**

This invention relates to ultrathin carbon fibers having various structures and comprising tubular laminates of ultrathin carbon sheets. Particularly, this invention relates to the ultrathin carbon fibers which are suitable for use as a filler to be added to resin or the like.

**BACKGROUND ART**

Carbon fibers are well known in the art as carbons having fibrous appearance. Some of these are known as ultrathin carbon fibers, which may be classified by their diameters and have receivedwide attention. The ultrathin carbon fibers may also be referred to as, for instance, vapor phase grown carbon fiber, carbon nanofiber, carbon nanotube, etc. Among ultrathin carbon fibers, the carbon nanotubes are those typically having diameters of not more than 100 nm. Since carbon nanotubes have unique physical properties, they are expected to be used in various applications, such as nanoelectrical materials, composite materials, catalyst support for fuel cells, gas absorbents, etc.

Carbon nanotubes include single wall carbon nanotubes (SWNTs) and multi wall carbon nanotubes (MWNTs). Single wall carbon nanotubes (SWNTs) each comprise a tubular monolayer of a sheet, wherein carbon atoms are bonded to each other to form a network structure, i.e., a graphene sheet. Multi wall carbon nanotubes (MWNTs) each comprise several tubular graphene sheets, which are coaxially layered. Depending on the chiral index, which is related to the diameter and the geometrical arrangement of the rolled graphene sheet, the characteristics of a carbon nanotube may be metallic or semimetallic.

As such carbon nanotubes, fibrils has been known which comprise multiple continuous layers of regularly ordered carbon atoms, wherein the multiple continuous layers have a substantially graphite structure, wherein each layer and the core in the fibrils are disposed substantially concentrically about the cylindrical axis of the fibril, and wherein the fibrils are graphitic (See, for example, Patent Literatures 1 and 2). Further, catalytically grown carbon fibrils has been also known which comprise multiple continuous layers of regularly ordered carbon atoms, wherein the ordered carbon atoms have c-axes that are substantially perpendicular to the cylindrical axes of the fibrils, wherein each layer and the core in these fibrils are disposed substantially concentrically about the cylindrical axes of the fibrils, and wherein the fibrils are graphitic (See, for example, Patent Literature 3).

The fibers having the layered structure of concentric graphene sheets, however, are prone to deformations and may adhere to each other due to their van der Waals interactions. The bulk fibers, therefore, have a tendency to form aggregates, in which the fibers are mutually entangled in a complicated web. When such aggregate particles are added as a filler to a matrix material, it is difficult to disentangle the fibers of the aggregates. As a result, it is difficult to disperse the fibers throughout the matrix.

When carbon nanotubes are added as a filler to a matrix material to improve electrical conductivity of a material, it is preferable to use a minimum amount of the carbon nanotubes, so that the electrical conductivity of the material can be improved with little loss of the original properties of the matrix material. In order to improve the electrical conductivity of a matrix material with a minimum amount of carbon nanotubes, it would be desirable to have improved electrical conductivity of the carbon nanotubes by eliminating defects in the graphene sheets and to have improved dispersability of the carbon nanotubes so that they can be dispersed in random orientations throughout the matrix. Carbon nanotubes contribute conductive paths in the matrix by forming carbon fiber networks, and they are more effective when they are dispersed in random orientations in the matrix.

Patent Application WO-A-2004/099477 discloses a fine carbon fiber having linearity, each fiber filament of the carbon fiber having a bending angle of 30 or less with respect to the longitudinal direction of the fiber filament. In the fine carbon fiber of WO-A-2004/099477, each fiber filament includes a hollow space extending along its axis, and has an outer diameter of 1 to 1,000 nm, an aspect ratio of 5 to 1,000, and a BET specific surface area of 2 to 2,000 $m^2/g$, wherein the average interlayer distance ($d_{oo2}$) of the carbon fiber at a (002) plane is 0.345 nm or less as measured by means of X-ray diffractometry, and the ratio of the peak height (Id) of the band at 1,341 to 1,349 $cm^{-1}$ in a Raman scattering spectrum of the carbon fiber to that of the peak height (Ig) of the band at 1,570 to 1,578 $cm^{-1}$ in the spectrum, i.e., Id/Ig, is 0.1 to 2.

Patent Application WO-A-2005/023937 discloses a method for producing a conductive polymer, comprising a step of blending a polymer in a state of a melt viscosity of 600 Pa.s or less at a shear rate of 100 $s^{-1}$ with a vapor grown carbon fiber in an amount of 1 to 15 mass%, at a mixing energy of 1,000 $mJ/m^3$ or less.

Patent Application EP-A-1275759 discloses a fine carbon fiber having an outer diameter of 1 to 80 nm and an aspect ratio of 10 to 30,000. Further, the fiber has a cross-section perpendicular to the longitudinal direction of fiber being of a polygonal shape. EP-A1-1275759 also discloses a method for producing of fine carbon fiber comprising subjecting a vaporized organic compound solution and a carrier gas to a preliminary heating treatment of 700 to 1300 °C and to a second heating treatment of 900 to 3000 °C.

Patent Literature 1: US Patent No. 4,663,230
Patent Literature 2: JP-H03-174018-A
Patent Literature 3: US Patent No. 5,165,909

## DISCLOSURE OF THE INVENTION

### PROBLEMS TO BE SOLVED BY THIS INVENTION

Therefore, this invention aims to provide ultrathin carbon fibers which enjoy physical properties suitable for filler to be used for composite preparation, in other words, which exhibit a high dispersibility to the matrix of the composite, take a relatively straight shape, and carry a high strength and a good electric conductivity, and more preferably, to provide those having a maximum fibrous diameter of not more than 100 nm.

Ultrathin carbon fibers manufactured by the CVD process, when examined with a transmission electron microscope (TEM) may show a structure, wherein the graphene sheets are beautifully stacked. When these carbon fibers are analyzed with Raman spectroscopy, however, the D bands thereof may be very large and many defects may be observed. Furthermore, in some cases, the graphene sheets produced by the CVD processes may not fully develop, resulting in patch-like structures.

### MEANS FOR SOLVING THE PROBLEMS

Inventors of the present invention have found that heat treatment of the ultrathin carbon fibers at high temperatures can reduce the magnitudes of the D bands and enhance the electrical conductivities of the ultrathin carbon fibers. The high-temperature treatment results in carbon fibers having polygonal cross sections, the cross section being taken in a direction orthogonal to the axes of the fibers. The high-temperature treatment also makes the resultant fibers denser and having fewer defects in both the layer stacking direction and the surface direction of the graphene sheets that comprise the carbon fibers. As a result, the carbon fibers have enhanced flexural rigidity (EI) and improved dispersability in a resin.

A first aspect of the present invention to solve the above mentioned problems is, therefore, ultrathin carbon fibers comprising tubular graphene sheets layered in a direction orthogonal to the axis of the ultrathin carbon fiber, wherein the tubular graphene sheets show polygonal cross sections in a direction orthogonal to the carbon fiber axis, wherein a maximum diameter of the cross sections is in the range of 15 to 100 nm; an aspect ratio of the carbon fiber is no more than 10<5> ; and ID/IG of the carbon fiber as determined by Raman spectroscopy is not more than 0.1.

According to an embodiment of the present invention, an anisotropic ratio of magneto resistances of the carbon fiber is not less than 0.85.

According to another embodiment of the present invention, magneto resistances of the fibers may have negative values in a range of magnetic flux density up to 1 Tesla (T).

Further, the maximum magneto resistance at 1 Tesla (T) may be not more than -0.1%

An ultrathin carbon fiber according to the present invention may be prepared by heating a mixture gas of a catalyst and a hydrocarbon at a temperature in the range of 800 - 1300 °C to produce an intermediate, which is then subjected to treatment in a heating furnace maintained at a temperature in the range of 2400 -3000 °C while allowing the intermediates to fall down in the furnace to heat and refine the intermediate, without subjecting the intermediate to any compression process.

Alternatively, an ultrathin carbon fiber according to the present invention may be prepared by heating a mixture gas of a catalyst and a hydrocarbon at a temperature in the range of 800 - 1300 °C to produce a first intermediate, which is then subjected to treatment in a first heating furnace maintained at a temperature in the range of 800 - 1200 °C to heat the first intermediate and transform it into a second intermediate, without subjecting the intermediate to any compression process, which is then subjected to treatment in a second heating furnace maintained at a temperature in the range of 2400 -3000 °C while allowing the second intermediates to fall down in the furnace to heat and refine the second intermediate.

A second aspect of the present invention is a method comprising heating a mixture gas of a catalyst and a hydrocarbon at a temperature in the range of 800 - 1300 °C to produce an intermediate, and subjecting the intermediate to treatment in a first heating furnace maintained at a temperature in the range of 2400 - 3000 °C while allowing the intermediates to fall down in the furnace to heat and refine the intermediate, without subjecting the intermediate to any compression process.

According to an embodiment of the present invention, the method may further comprise subjecting the intermediate to treatment in a second heating furnace maintained at a temperature in the range of 800 - 1200 °C, without subjecting the intermediate to any compression process, prior to subjecting the intermediate to treatment in the first heating furnace. According to another embodiment of the present invention, the ultrathin carbon fiber comprises a fibrous substance comprising tubular graphene sheets layered in a direction orthogonal to the axis of the ultrathin carbon fiber, wherein the tubular graphene sheets include polygonal cross sections in a direction orthogonal to the carbon fiber axis, wherein a maximum diameter of the cross sections is in a range of 15 to 100 nm, an aspect ratio of the ultrathin carbon fiber is not more than $10^5$, and $I_D/I_G$ of the ultrathin carbon fiber as determined by Raman spectroscopy is not more than 0.1.

The above mentioned catalyst may comprise a transition metal compound, and sulfur or a sulfur compound.

According to another embodiment of the present invention, in the first heating furnace, the intermediate is subjected to a falling down process so that the bulk density of the carbon fibers may be selected to be about 5 - 20kg/m$^3$.

The intermediate may be heated for 5-25 minutes in the first heating furnace.

EFFECTS OF THE INVENTION

The ultrathin carbon fibers according to the invention may have characteristics of high flexural rigidity and sufficient elasticity. Thus, these fibers can restore their original shapes even after deformation. Therefore, the ultrathin carbon fibers according to the present invention are less likely to intertwine in a state where the fibers are entangled with each other when they aggregate. Even if they happen to be entangled with each other, they can disentangle easily. Therefore, it would be easier to disperse these fibers in a matrix by mixing them with a matrix material because they are less likely to exist in an entangled state in the aggregate structure. Additionally, because carbon fibers according to the present invention have polygonal cross sections in a direction orthogonal to the axis of the fiber, these carbon fibers can be more densely packed, and fewer defects will occur in both the stacking direction and the surface direction of the tubular graphene sheets that comprise the carbon fibers. This property gives these carbon fibers enhanced flexural rigidities (EI) and improved dispersability in the resin. Furthermore, electrical conductivities of the carbon fibers may be improved by reducing defects in the graphene sheets that comprise the carbon fibers. Therefore, the carbon fibers can provide a high electrical conductivity when mixed in a matrix material.

**BRIEF DESCRIPTION OF THE DRAWINGS**

[Fig. 1] shows a transmission electron micrograph of an intermediate of the ultrathin carbon fiber according to the present invention;

[Fig. 2] shows a scanning electron micrograph of an ultrathin carbon fiber according to the present invention;

[Fig. 3] shows a transmission electron micrograph of an ultrathin carbon fiber according to the present invention;

[Fig. 4] shows anther transmission electron micrograph of an ultrathin carbon fiber according the present invention;

[Fig. 5] shows a still another transmission electron micrograph of an ultrathin carbon fiber according to the present invention;

[Fig. 6] shows an X-ray diffraction chart of ultrathin carbon fiber according to the present invention;

[Fig. 7] shows a graph which illustrates the magneto resistances of ultrathin carbon fibers according to the present invention;

[Fig. 8] shows a schematic diagram of a synthetic system used in Example 1;

[Fig. 9] shows a schematic diagram of a high-temperature heating apparatus used in Examples 1 and 2;

[Fig. 10] shows a schematic diagram of a synthetic system used in Example 2; and

[Fig. 11] shows an optical microphotograph of a composite material using ultrathin carbon fibers according to the present invention.

**BEST MODE FOR CARRYING OUT THE INVENTION**

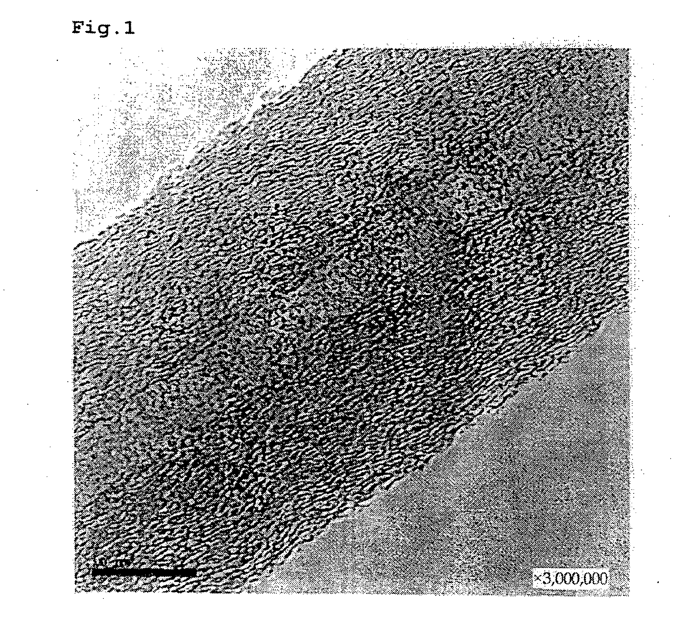

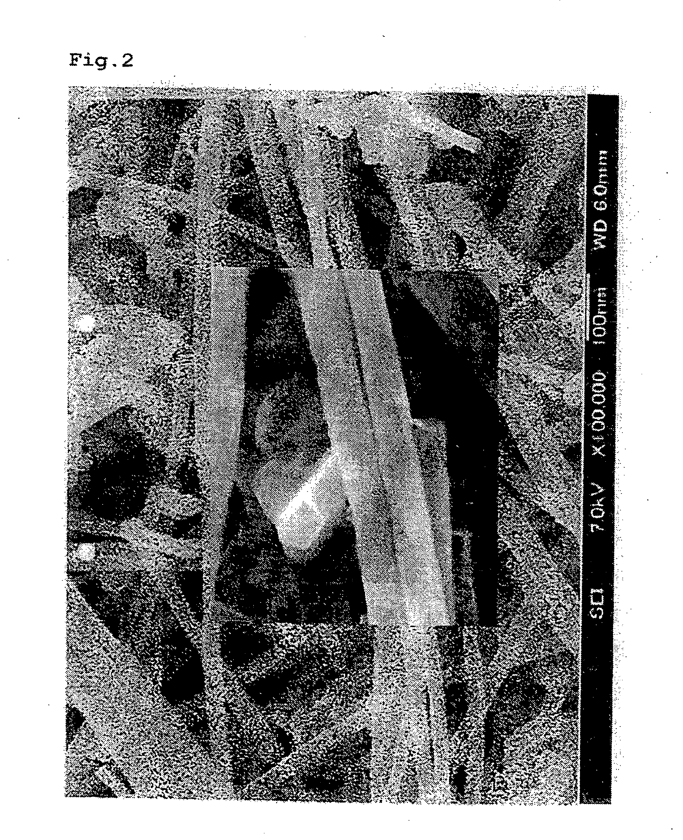

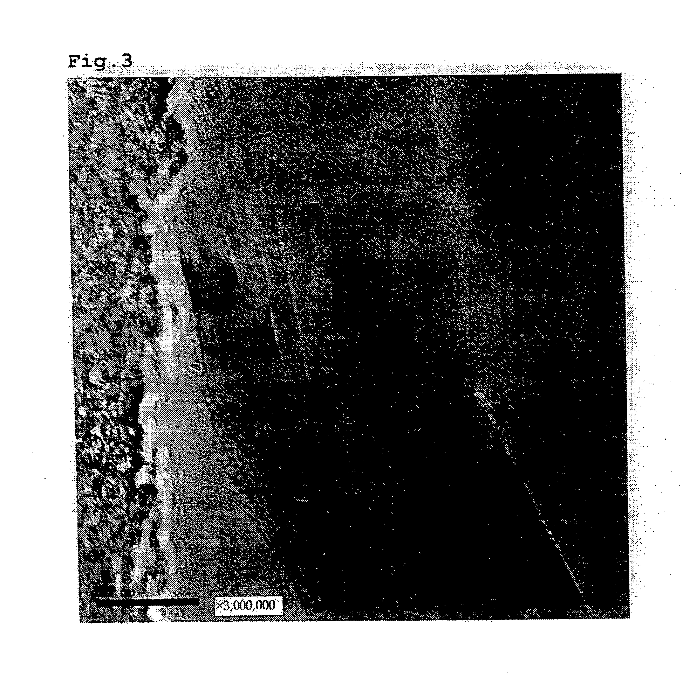

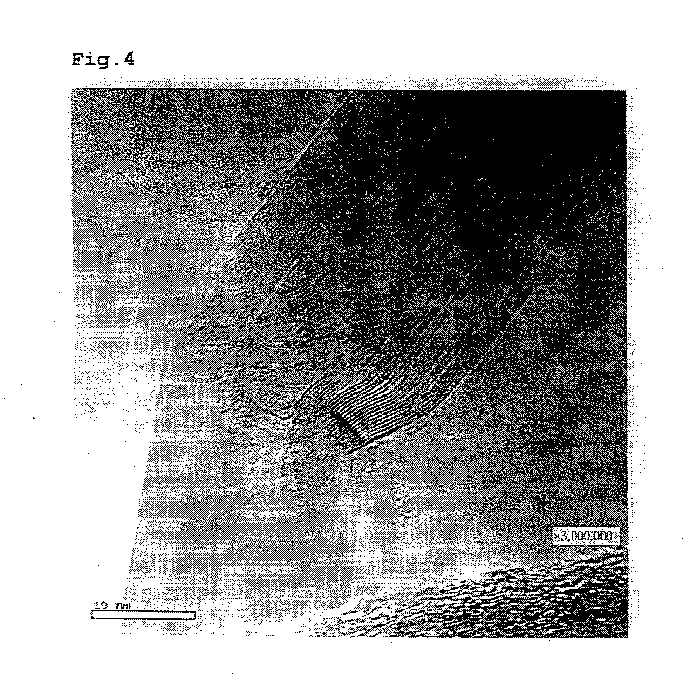

Ultrathin carbon fibers according to the present invention may be prepared by subjecting fibers, as shown in Fig. 1, wherein carbons are stacked in patch-like configuration, to heat treatment at 2400 -3000 °C. The ultrathin carbon fibers, as shown in Figs. 2 - 5, are characterized by the features that in ultrathin carbon fibers comprise tubular graphene sheets layered one over another in a direction substantially orthogonal to the axis of the ultrathin carbon fiber, the tubular sheets have polygonal cross sections in a direction orthogonal to the fiber axis, that is, the tubular graphene sheets have, in the cross sections, contours that may be discontinuous and may comprise in some parts straight lines or curves not having the constant curvature of a circular curve; that the polygonal cross section may be observed in a section along the length of the tube; that the maximum diameters of the cross sections of these carbon fibers are in the range of 15 to 100 nm; that the aspect ratios of the carbon fibers are not more than $10^5$; and that the $I_D/I_G$ of the carbon fibers, as determined by Raman spectroscopy, are not more than 0.1.

The fact that the carbon fibers may show polygonal figures as the cross sections is a result of annealing at a temperature of not less than 2400 °C. Additionally, the density of the carbon fiber can be increased from $1.89 \text{g/cm}^3$ to $2.1 \text{g/cm}^3$ by annealing. Therefore, the carbon fibers are denser and have fewer defects in both the stacking direction and the surface direction of the graphene sheets that comprise the carbon fibers. Thus, the flexural rigidity (EI) and the dispersibility in the resin of the carbon fibers are improved.

In order to enhance the strength and electrical conductivity of the carbon fibers, it is desirable that the graphene sheets that comprise the carbon fibers have minimum defect. Concretely, for example, the $I_D/I_G$ ratios of the carbon fibers, as determined by Raman spectroscopy, are not more than 0.2, more preferably, not more than 0.1. In Raman spectroscopy, a large single crystal graphite has only a peak (G band) at 1580 $\text{cm}^{-1}$. When the graphite crystals are small or have any lattice defects, a peak (D band) at 1360 $\text{cm}^{-1}$ can appear. Thus, when the intensity ratio ($R=I_{1360}/I_{1580}=I_D/I_G$) of the D band and the G band is below the limits defined above, the graphene sheets have little defect.

In the present invention, it is desirable that the maximum diameters of the sections lie between 15 nm and 100 nm. When the outer diameter is less than 15 nm, the cross section of the carbon fiber does not have a polygonal shape. On the other hand, the smaller the diameters are, the longer the carbon fibers will be for the same amount of carbon. The longer carbon fibers will have enhanced electrical conductivities. Thus, it is not desirable to have the maximum diameters of the ultrathin carbon fibers greater than 100 nm for use as modifiers or additives to improve conductivity of a matrix, such as a resinous material, etc. Particularly, it is desirable to have the outer diameters of the carbon fibers in the range of 20 - 70 nm. A carbon fiber having a diameter within the preferred range and having tubular graphene sheets layered one over another in a direction orthogonal to the fiber axis would have high flexural rigidity and sufficient elasticity. This property would allow the carbon fiber to restore to its original shape after undergoing any deformation. Therefore, such fibers tend to adopt relaxed structures when dispersed in a matrix, even if it has been deformed before or during mixing into the matrix material.

The reason why carbon fibers in accordance with the invention preferably have aspect ratios of not more than $10^5$ is as follows. When the aspect ratio of a carbon fiber exceeds $10^5$, undesirable effects may arise, such as heightened viscosity when mixed with a resin, resulting in bad moldability.

An ultrathin carbon fiber according to the present invention preferably has a magneto resistance that has a negative value in a range of magnetic flux density up to 1 Tesla (T) and decreases with increasing magnetic flux density and preferably maximum magneto resistance $(\Delta \rho / \rho)_{max}$ at 1 tesla (T) is not more than -0.1%.

This is in contrast to single crystal graphite, which has a positive magneto resistance that increases monotonously with increasing magnetic flux density. The magnitude of magneto resistance of a carbon fiber becomes small when more defects exist in the carbon material. When a carbon fiber contains microcrystals of graphite, the magneto resistance is positive and increases with increasing magnetic flux density, or the magneto resistance may temporarily have a negative value and then becomes positive and thereafter increases with increasing magnetic flux density. On the other hand, the absolute value of the magneto resistance becomes small when a carbon fiber contains no graphite structure or have many defects in the graphene sheet (See, "Explanation :Carbon Family (Respective Diversities and Evaluation therefor)," Agune Shoufu Sha).

Therefore, the criteria described above, i.e., the magneto resistance of a carbon fiber has a negative value and decreases with increasing magnetic flux density up to 1 Tesla (T), and the maximum magneto resistance $(\Delta \rho / \rho)_{max}$ at 1 Tesla (T) is not more than -0.1%, may be used to show that the respective layers, or graphene sheets, that comprise a carbon fiber have two dimensional structures with few defects and do not form three dimensional graphite structure between adjacent layers.

Incidentally, the magneto resistance is a value that depends not only on Lhe crystallinity of the graphene sheet, such as, size, integrity, etc., of the graphene sheet, but also on the orientation of the graphene sheet, due to its anisotropy. Therefore, by measuring azimuthal dependence of the magneto resistance, the crystallinity of graphene sheet and its orientation may be determined.

The aforementioned maximummagneto resistance $(\Delta \rho / \rho)_{max}$ is, as known in the art, a value that can be determined by applying a constant magnetic flux density having a fixed magnitude to a sample, in three orthogonal directions, and measuring respective magneto resistances in the three directions of the magnetic fields. The "$T_{max}$" direction, which is the direction of the magnetic field that produced the maximum magneto resistance, is determined. Then, $(\Delta \rho / \rho)_{max}$ is defined as the value of the magneto resistance in the $T_{max}$ direction.

Moreover, the $(\Delta \rho / \rho) \, TL_{min}$ is the minimum value of magneto resistances that are measured by giving a rotation (TL rotation) in the direction of the magnetic field from the $T_{max}$ direction along the electrical current direction under a constant magnetic flux density and as a function of rotational angle $\varphi$. Additionally, the $(\Delta \rho / \rho) \, T_{min}$ is the minimum value of magneto resistances that are measured by giving a rotation (T rotation) in the direction of the magnetic field in a plane perpendicular to the electrical current direction and as a function of rotational angle 6.

Dependence of the magneto resistance values $(\Delta \rho / \rho)$ on the rotational angles $\varphi$ and $\theta$ is related to the selective orientations of the graphene sheet. Therefore, anisotropy ratios $\gamma_T$ and $\gamma_{TL}$, which are defined as follows, can be used as parameters to show the selective orientation of a graphene sheet.

$$\gamma_T = (\Delta\rho/\rho)\, T_{min} / (\Delta\rho/\rho)_{max}$$

$$\gamma_{TL} = (\Delta\rho/\rho)\, TL_{min} / (\Delta\rho/\rho)_{max}$$

As for the ultrathin carbon fibers according to the present invention, it is desirable that both these anisotropy ratios of the magneto resistance are not less than 0.85. When the magneto resistance ($\Delta\rho/\rho$) is a negative, as described above, and each of these anisotropy ratios has a value close to 1, it is found that the graphene sheets, i.e., the fiber, are not oriented in any particular direction, and thus, they are randomly oriented.

As for the ultrathin carbon fibers according to the present invention, it is also desirable that the spacing for the (002) faces, as determined by X ray diffraction, is in the range of 3.38 - 3.39 angstroms.

That the ultrathin carbon fibers according to the present invention have such structures as described above is likely due to the fact that the intermediate (first intermediate) prepared by heating a mixture gas of a catalyst and a hydrocarbon at a temperature in the range of 800 - 1300 °C in a generation furnace has a structure comprising patch-like sheets of carbon atoms laminated together (i.e., some sheets are still in half-raw, or incomplete condition) (See, Fig. 1).

When the above-mentioned intermediate is subjected to heat treatment at a temperature in the range of 2400 - 3000 °C, the patch-like sheets of carbon atoms are rearranged to associate with each other and form multiple graphene sheet-like layers. Under these circumstances, the respective layers cannot self-align to form the graphite structure because the layers are forced to adopt the tubular three-dimensional structure of the intermediate as a whole. When heat treatment is run at a temperature sufficiently higher than 3000 °C, the carbon atoms may have a high degree of freedom and may rearrange because the carbon bonds may be broken at such a high temperature. When at a temperature of not more than 3000 °C, they may have limited movement while being bound to each other (or being chained together, or in the patch-like structure) . As a result, although the defects may be repaired within individual graphene sheets, the faults at the profile section of layers or the alignments and realignments of the layers are formed locally by excess and deficiency of the carbon atoms.

Next, the production process of ultrathin carbon fibers according to the present invention will be described. Briefly, an organic compound, such as a hydrocarbon, is thermally decomposed in CVD process in the presence of ultra fine particles of a transition metal as a catalyst. The residence time for ultrathin carbon fiber nucleus, intermediate product, and fiber product in the generation furnace is preferably short in order to produce carbon fibers (hereinafter, referred to as "intermediate" or "first intermediate"). The intermediate thus obtained is then heated at high temperature in order to produce the ultrathin carbon fibers having the desirable properties.

(1) Synthesis Method

Although the intermediate or first intermediate may be synthesized using a hydrocarbon and the CVD process conventionally used in the art, the following modifications of the process are desired:

A) The residence time of the carbon in the generation furnace, which is computed from the mass balance and hydrodynamics, is preferably adjusted to be below 10 seconds;
B) In order to increase the reaction rate, the temperature in the generation furnace is set to 800-1300 °C;
C) Before adding to the generation furnace, the catalyst and the hydrocarbon raw material are preheated to a temperature of not less than 300 °C so that the hydrocarbon can be delivered in gaseous form to the furnace; and
D) The carbon concentration in the gas in the generation furnace is adjusted so as to be not more than a selected value (e.g. 20 % by volume).

(2) High temperature heat treatment process To manufacture the ultrathin carbon fiber according to the present invention efficiently, the intermediate or first intermediate obtained with the above method is subj ected to high temperature heat treatment at 2400-3000 °C in an appropriate way. The fibers of the intermediate or first intermediate include a lot of adsorbed hydrocarbons because of the unique process described above. Therefore, in order to have fibers usable industrially, it is necessary to separate the adsorbed hydrocarbons from the fibers. To separate the unnecessary hydrocarbons, the intermediate may be subjected to heat treatment at a temperature in the range of 800 - 1200 °C in a heating furnace. However, defects in the graphene sheet may not be repaired to an adequate level in the aforementioned hydrocarbon separation process. Therefore, the resultant product from this process may be further subjected to another heat treatment in a second heating furnace at a temperature higher than the synthesis temperature. The second heat treatment may be performed on the powdered product as-is, without subjecting the powder to any compression process.

For the high temperature heat treatment at 2400 - 3000 °C, any process conventionally used in the art may be used, except that the following modifications are desirable:

A) The fibers obtained from the CVD process mentioned above are subjected to heat treatment at 800 - 1200 °C to separate the adsorbed hydrocarbon from the fibers; and

B) In the next step, the resultant fibers are subjected to high temperature heat treatment at 2400 - 3000 °C.

In this process, it is possible to add a small amount of a reducing gas or carbon monoxide gas into the inert gas atmosphere to protect the material structure.

As raw material organic compounds, hydrocarbons such as benzene, toluene, and xylene; carbon monoxide (CO); or alcohols such as ethanol may be used. As an atmosphere gas, hydrogen, inert gases such as argon, helium, xenon may be used.

As catalysts, a mixture of transition metal such as iron, cobalt, molybdenum or a transition metal compounds such as ferrocene, metal acetate, and sulfur or a sulfur compound, such as thiophene or ferric sulfide, may be used.

In an embodiment of the invention, a rawmaterial organic compound and a mixture of a transition metal or transition metal compound and sulfur or sulfur compound as a catalyst are heated to a temperature of not less than 300 °C along with an atmosphere gas in order to gasify them. Then, the gasified mixture is added to the generation furnace and heated therein at a constant temperature in the range of 800 - 1300 °C, preferably, in the range of 1000 - 1300 °C, in order to synthesize ultrathin carbon fibers by dint of improvement of minute particle formation of catalyst metal and decomposition of hydrocarbon. The carbon fiber products (as the intermediate or first intermediate) thus obtained may include unreacted raw materials, nonfibrous carbons, tar, and catalyst metal.

Next, the intermediate (or first intermediate) in its as-is powder state, without subjecting it to compression molding, is subjected to high temperature heat treatment either in one step or two steps.

In the one-step operation, the intermediate is conveyed into a heating furnace along with the atmosphere gas, and then heated to a temperature (preferably a constant temperature) in the range of 800 - 1200 °C to remove the unreacted raw material, adsorbed carbon, and volatile flux, such as tar, by vaporization. Thereafter, it may be heated to a temperature (preferably a constant temperature) in the range of 2400 - 3000 °C to improve the structures of the multilayers in the fibers, and, concurrently, to vaporize the catalyst metal included in the fibers to produce refined ultrathin carbon fibers. In the refined ultrathin carbon fibers, the respective layers therein have graphitic, two-dimensional structures. On the other hand, between the layers, there is substantially no regular, three-dimensional structure. Therefore, the layers in such refined carbon fibers are substantially independent of each other.

Alternatively, the high temperature heat treatment may be performed in two steps, the first intermediate is conveyed, along with the atmosphere gas, into a first heating furnace that is maintained at a temperature (preferably a constant temperature) in the range of 800 - 1200 °C to produce a ultrathin carbon fiber (hereinafter, referred to as "second intermediate"). The heat treatment removes unreacted raw materials, adsorbed carbons, and volatile flux such as tar by vaporization. Next, the second intermediate is conveyed, along with the atmosphere gas, into a second heating furnace that is maintained at a temperature (preferably a constant temperature) in the range of 2400 - 3000 °C to improve the structures of the multilayers in the fibers, and, concurrently, to vaporize the catalyst metal that is included in the second intermediate to produce refined ultrathin carbon fibers. It is desirable that the heating period for the second intermediate in the second heating furnace is in the range of 5-25 minutes, and the bulk density of the second intermediate in the second heating furnace is adjusted to be not less than 5 $kg/m^3$ and not more than 20 $kg/m^3$, preferably, not less than 5 $kg/m^3$ and not more than 15 $kg/m^3$. When the bulk density of the intermediate is less than 5 $kg/m^3$, the powder does not flow easily so as to achieve good heat treatment efficiency. When the bulk density of the intermediate is more than 20 $kg/m^3$, the final product does not readily disperse on mixing with resins, although the heat treatment efficiency of the intermediate is good.

The generation furnace used in this process is preferably a vertical type. The high temperature heating furnaces used in this process may be a vertical type or horizontal type; however, the vertical type is preferred because it allows the intermediate to fall down.

The ultrathin carbon fibers according to the present invention may have one or more of the following properties:

A) high electrical conductivity;
B) high heat conductivity;
C) good sliding ability;
D) good chemical stability;
E) good dispersibility in resins (matrix materials); and etc. Thus, ultrathin carbon fibers of the invention can be used as fillers of composite materials in a wide range of applications.

Ultrathin carbon fibers of the invention may be used as fibers by themselves, or as powders added to other materials. When used as fibers alone, they may be used, for example, FED, electron microscope elements, semiconductor devices, and others devices, utilizing their electron emission ability, electrical conductivity, superconductivity, etc. When used as powders, depending on the form utilized, it can be classified as: 1) zero dimensional composite materials, such as a slurry, in which the carbon fiber powder is dispersed; 2) one dimensional composite materials that are processed into a linear form; 3) two dimensional composite materials that are processed into a sheet form, such as cloth, film, or paper; and 4) three dimensional composite materials in a complex formorblock. By combining such forms and functions, ultrathin carbon fibers of the invention may have a very wide range of applications. The following describes examples of the applications of these carbon fibers according to their functions.

1) One which utilizes electrical conductivity

Ultrathin carbon fibers of the invention may be mixed with a resin to produce a conductive resin or conductive resin molded body, which may be used as wrapping material, gasket, container, resistance body, conductive fiber, electrical wire, adhesive, ink, paint, and etc. In addition to resin composites, similar effects can be expected with a composite material that results from adding the carbon fibers to an inorganic material, such as ceramic, metal, etc.

2) One which utilizes heat conductivity In order to improve heat conduction, ultrathin carbon fibers of the invention may be added to fuel as well as a matrix material similar to the above-described applications based on electrical conductivity.

3) One which utilizes electromagnetic wave shielding ability Ultrathin carbon fibers of the invention may be mixed with a resin and used as electromagnetic wave shielding materials, in the form of paints or other molded shapes.

4) One which utilizes unique physical characteristics Ultrathin carbon fibers of the invention may be mixed with a matrix, such as a resin or metal, to improve slidability of the matrix. Such materials may be used in, for example, rollers, brake parts, tires, bearings, lubricating oil, cogwheel, pantograph, etc.

Also, due to its light-weight and toughness characteristic, ultrathin carbon fibers of the invention can also be used in wires, bodies of consumer electronics or cars or airplanes, housings of machines, etc.

Additionally, it is possible to use these carbon fibers as substitutes for conventional carbon fibers or beads, and they may be used in a terminal or poles of a battery, switch, vibration damper, etc.

5) One which utilizes a filler characteristic Ultrathin carbon fibers of the invention have excellent strength, and moderate flexibility and elasticity. Thus, they may be advantageously used as fillers in various materials, for example, to form a network structure. Based on these characteristics, it is possible to use these carbon fibers, for example, to strengthen the terminals of power devices such as a lithium ion rechargeable battery or a lead-acid battery, a capacitor, and a fuel cell, and to improve cycle characteristics of these power devices.

## EXAMPLES

Hereinafter, this invention will be illustrated in detail with practical examples. However, it is to be understood that the invention is not limited thereto.

The measurement methods used to assess the individual physical properties described hereinafter include the following.

(1)X ray diffraction method

Because graphite has three-dimensional regularity, in this method, the graphite crystal lattice diffracts X-ray by the black reflection to give readily discernable diffraction peaks for the (101) and (112) faces. If a sample contains no graphite, the diffraction peaks for the (112) face would not appear clearly. If a graphite contains turbostratic structures, the diffraction peaks in the direction of the C-axis, which is perpendicular to the graphene sheet, such as the peaks for the (002) and (004) faces, as well as the diffraction peaks in the direction of the a-axis, which is in-plane of the graphene sheet, such as the peaks for the (100) and (110) faces, are detectable.

An ideal graphite crystal has a three dimensional regular structure wherein the flat graphene sheets are regularly layered, and each plane is closely packed with the next with a spacing of 3.354 angstroms. On the other hand, if the graphite structure is not ideal, this regularity is disrupted and the graphite may include "turbostratic" structure, in which the spacing between the layers is larger than that of graphite crystal. When the spacing lies between 3.38 angstroms and 3.39 angstroms, the carbon material includes the turbostratic structure in part.

(2) Magneto Resistance Method

It is possible to judge whether or not carbon fibers contain any graphite structure based on the electromagnetic characteristic of graphite. The method determines graphitization degree, which is sensitive to the extent of lattice defects. Briefly, at a selected temperature, magneto resistance is measured with respect to magnetic flux density.

Magneto resistance $\Delta\rho/\rho$ is defined by the following equation:

$$\Delta\rho/\rho = [\rho(B) - \rho(0)] / \rho(0)$$

wherein B denotes the magnetic flux density, $\rho(0)$ denotes the electrical resistivity under the condition of no magnetic field, and $\rho(B)$ denotes the electrical resistivity under the condition of a constant magnetic field B.

The magneto resistance takes a positive value when the sample is single crystal graphite, and the value decreases when the defects in the sample increase. When the sample includes microcrystalline graphite, the magneto resistance increases within the positive value range with increasing magnetic flux density, or the magneto resistance may temporarily become negative, then returns to positive, and thereafter increases in the positive value range with increasing magnetic flux density. With carbon fibers not containing graphite, the magneto resistance decreases in the negative value range with increasing magnetic flux density. Further, because the magneto resistance values vary with orientations of the graphite crystal, the orientation of the graphite crystal can be determined by measuring magneto resistance of the sample with appropriate rotation of the sample.

The magneto resistance can be used to determine the crystallinity of the graphite with a high sensitivity, as compared to electrical resistance measurements, Raman spectroscopy analysis, peak analysis of the (002) face from X ray diffraction, etc.

(3) Raman spectroscopy method

In this method, a large single crystal of graphite has only one peak (the G band) at 1580 cm$^{-1}$. When the graphite crystals are of finite minute sizes or have any lattice defects, another peak (Dband) at 1360 cm$^{-1}$ also appears. Thus, graphite defects may be analyzed with the intensity ratio ($R=I_{1360}/I_{1580}=I_D/I_G$) of the D band and the G band. It is known in the art that a correlation exists between the crystal size La and R in the graphene sheet plane. R=0.1 is supposed to be equivalent to La=500 angstroms.

The respective physical properties described later are measured according to the following parameters.

(1) X ray diffraction

Using the powder X ray diffraction equipment (JDX3532, manufactured by JEOL Ltd.), carbon fibers after annealing processing were determined. K$\alpha$ ray, which was generated with a Cu tube at 40 kV, 30 mA was used, and the measurement of the spacing was performed in accordance with themethoddefined by The Japan Society for the Promotion of Science (JSPS), described in "Latest Experimental Technique For Carbon Materials (Analysis Part)," Edited by the Carbon Society of Japan. Silicon powder was used as an internal standard.

(2) Magneto resistance

First, on a resin sheet, a mixture of an analyte and an adhesive was coated as a line. The thickness, width and length were about 1 mm, 1mm, and 50 mm, respectively. Next, the sample was put into the magnetic fieldmeasuring equipment. Magnetic flux was applied in various directions, and the resistances of the sample were measured. During measurements, the measuring equipment was cooled with liquid helium, etc. Separately, another magneto resistance at the room temperature was also determined.

(3) Raman spectroscopic analysis

Raman spectroscopic analysis was performed with LabRam 800™, which is manufactured by HORIBA JOBIN YVON, S.A.S.. The measurements were performed with 514 nm light from an argon laser.

[Example 1]

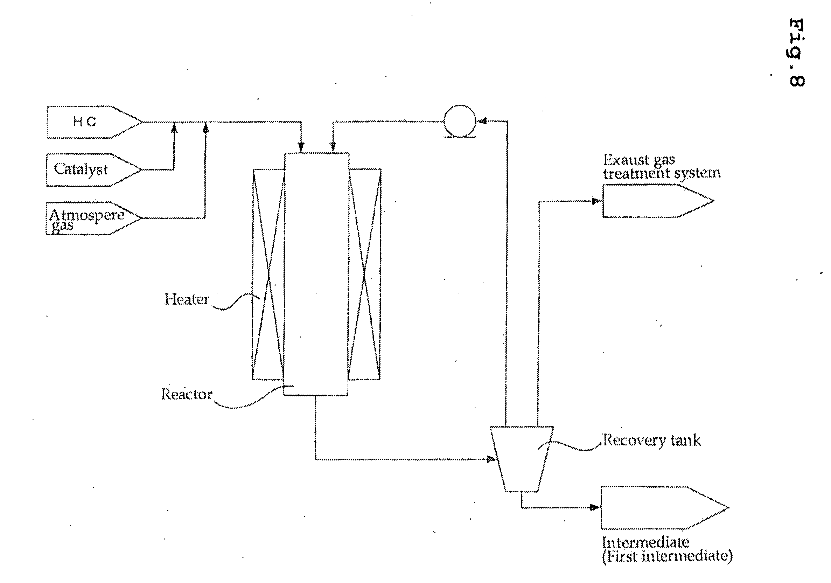

Using the CVD process, ultrathin carbon fibers are synthesized from toluene as a raw material. The synthetic system used is shown in Fig. 8.

The synthesis was carried out in the presence of a mixture of ferrocene and thiophene as the catalyst, and under a reducing atmosphere of hydrogen gas. Toluene and the catalyst were heated to 375 °C along with the hydrogen gas, and then they were supplied to the generation furnace to react at 1200 °C for a residence time of 8 seconds. The atmosphere gas was separated by a separator in order to use the atmosphere gas repeatedly. The hydrocarbon concentration in the supplied gas was 9 % by volume.

The tar content as a percentage of the ultrathin carbon fibers in the synthesized intermediate (first intermediate) was determined to be 10%.

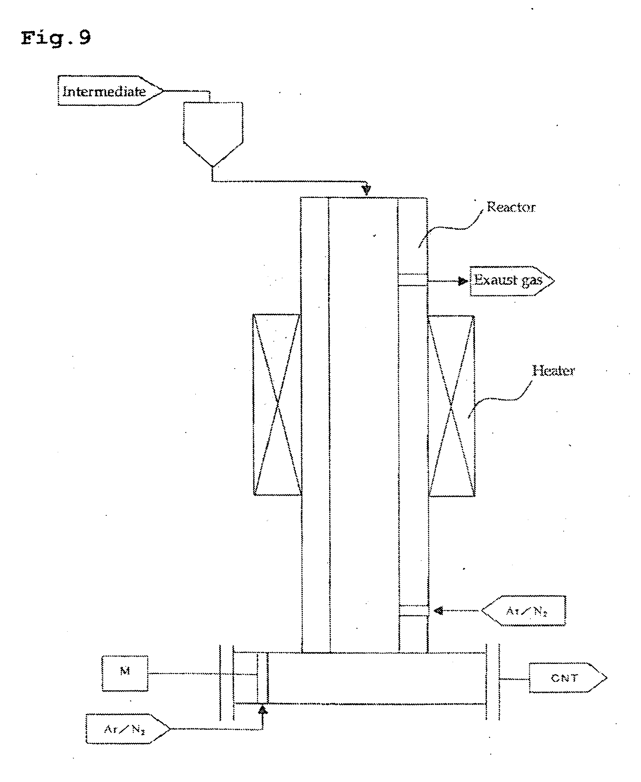

Next, the fiber intermediate was heated to 1200 °C, and kept at that temperature for 30 minutes in order to effectuate the hydrocarbon separation. Thereafter, the fibers were subjected to high temperature heat treatment at 2500 °C. Shown in Fig. 9 is the apparatus for the hydrocarbon separation and the high temperature heating treatment.

Fig. 1, which has been explained above, is an electron micrograph of an ultrathin carbon fiber after having been processed for hydrocarbon separation at 1200 °C. As shown in Fig. 1, the graphene sheets that comprise the ultrathin carbon fibers did not have a continuous configuration, but have a patch-like configuration.

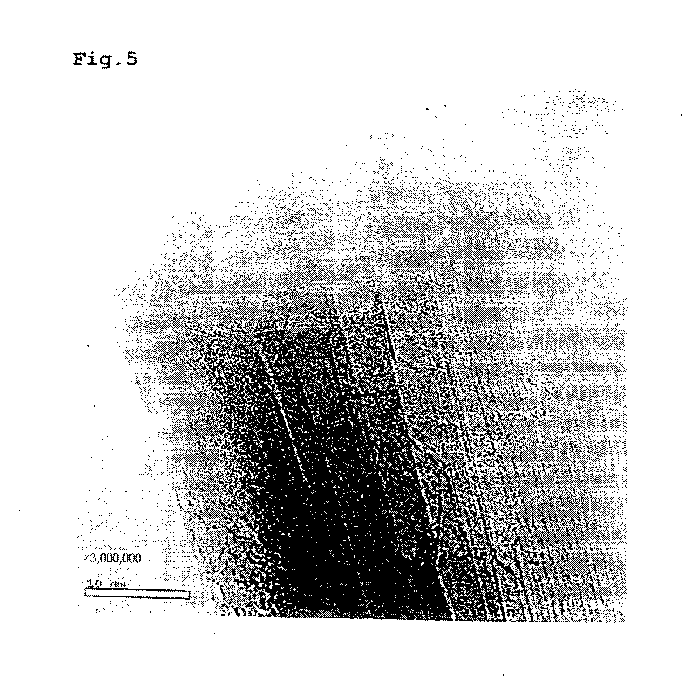

Fig. 5 is an electron micrograph of an ultrathin carbon fiber after the high temperature heating treatment at 2500°C.

From this micrograph, it is clear that the ultrathin carbon fibers have a unique configuration. From scanning electron microscopy (SEM), it was found that the diameters of the obtained fibers vary within a ranged of 10 - 60 nm and the specific surface area was 29 $m^2$/g. The magneto resistances of these fibers have negative values and decease (first derivative is negative with respect to the magnetic flux density B) with increasing magnetic flux density. The $I_D/I_G$ ratio, which was measured by Raman spectroscopy, was found to be 0.05.

[Example 2]

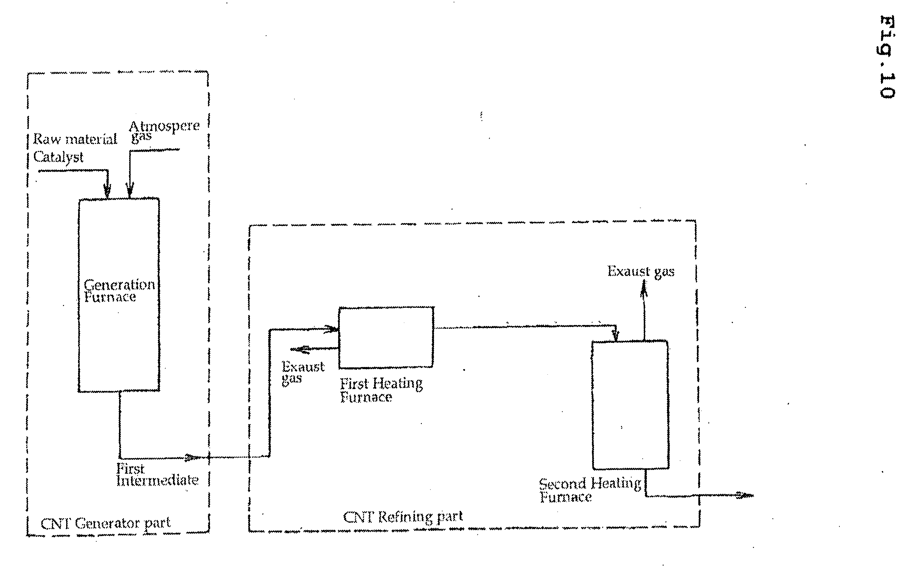

The synthetic system used for this example is shown in Fig. 10.

Benzene was used as the carbon source. Ferrocene and thiophene were used as the catalysts, which were added and dissolved in benzene. Then, the dissolved mixture was vaporized at 380 °C, and the vaporized mixture was supplied to the generation furnace. The temperature in the generation furnace was 1150 °C, and hydrogen gas was used as the atmosphere gas in the generation furnace. Residence time for the hydrogen gas and raw material gas was set to 7 seconds. The tar concentration in the carbon fibers (first intermediate), which were collected at the downstream side of the furnace supply gas, was found to be 14%.

Next, the carbon fibers (first intermediate) were subjected to heat treatment at 1200 °C for 35 minutes. After the heat treatment, the specific surface area of the resultant carbon fibers (second intermediate) were determined to be 33$m^2$/g. The $I_D/I_G$ ratio, which was measured by Raman spectroscopy, was found to be 1.0.

Further, the carbon fibers (second intermediate) were subjected to high temperature heat treatment at 2500 °C . The ultrathin carbon fibers after the high temperature heat treatment have negative magneto resistance values, which decrease (first derivative is negative with respect to the magnetic flux density B) with increasingmagnetic flux density. The $I_D/I_G$ ratio, which was measured by Raman spectroscopy, was found to be 0.08.

[Example 3]

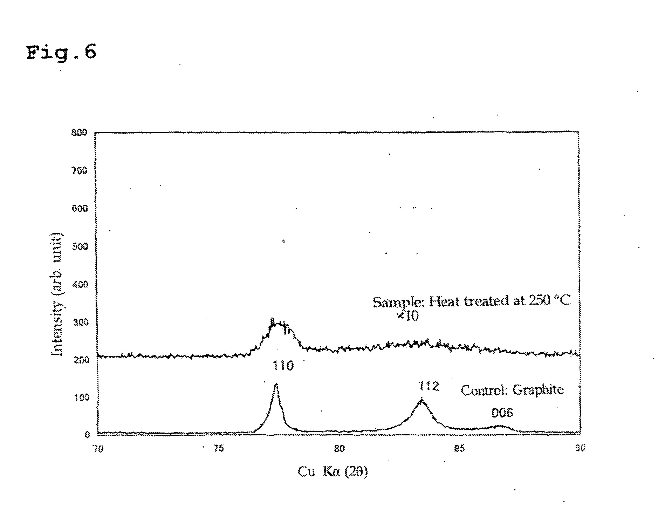

The ultrathin carbon fibers obtained in Example 1 was analyzed with an X ray diffraction. For comparison, a graphite sample was also subjected to X ray diffraction analysis. The X ray diffraction patterns obtained from these determinations are shown in Fig. 6. However, because the peak intensity for the ultrathin carbon fibers of Example 1 was very weak, the trace for the ultrathin carbon fibers was amplified 10 times for comparison with that for graphite.

From the comparison, it was found that both samples had a peak corresponding to the diffraction of the (110) face lying at approximately 77°. It was also found that the graphite sample had a peak corresponding to the diffraction of the (112) face lying at approximately 83°, while the sample of the ultrathin carbon fibers of Example 1 did not have such a peak. Therefore, this result shows that the ultrathin carbon fibers according to the present invention do not have a regular, three-dimensional structure like that of graphite.

Additionally, the spacing between the layers of the ultrathin carbon fibers, as measured from X-ray diffraction result, was found to be 3.388 angstroms.

[Example 4]

Measurement of magneto resistance

To 1.00g of the ultrathin carbon fibers produced in Example 1, 19.00g (CNT 5%) or 49.0g (CNT 2.0%) of a thickener (a heat-resistant inorganic adhesive ThreeBond® 3732, manufactured by Three Bond Co., Ltd.) was added, and then the mixture was kneaded using a centrifugal mixer at 2000 rpm for 10 minutes. The resultant mixture was applied on a 125 $\mu$m thick polyimide resin film (UPILEX®-S, manufactured by UBE Industries, Ltd.) as a line of 1 mm wide, and allowed to dry.

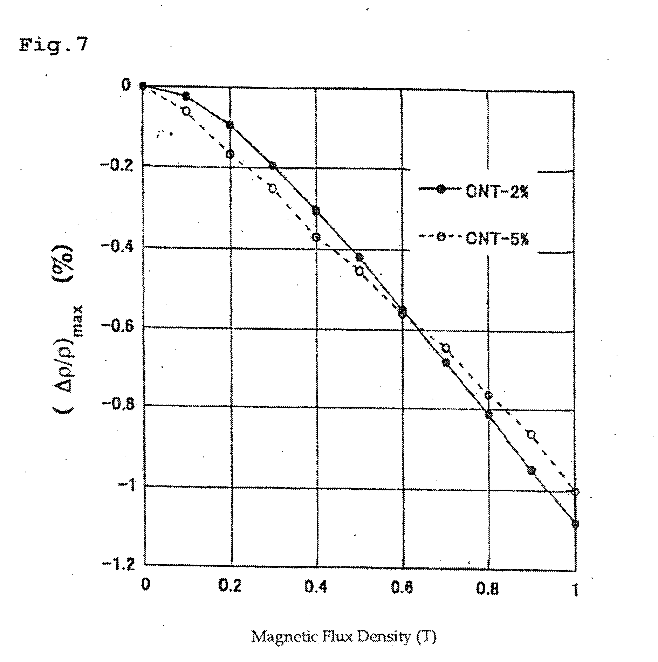

Next, the magneto resistance changes of this polyimide resin as a function of magnetic flux density at selected temperatures were determined. The results are shown in Table 1 and Fig. 7. As shown in Fig. 7, the magneto resistances of the ultrathin carbon fibers produced in Example 1 decrease in the negative value range with increasing magnetic flux density. The resistivity ratios of the resistivity at 273K (room temperature) to that at 77K ($\rho_{RT}/\rho_{77K}$) are positive. In other words, although the temperature rises, the magneto resistances remain negative. This result shows that the ultrathin carbon fibers do not have the graphitic properties.

[Example 5]

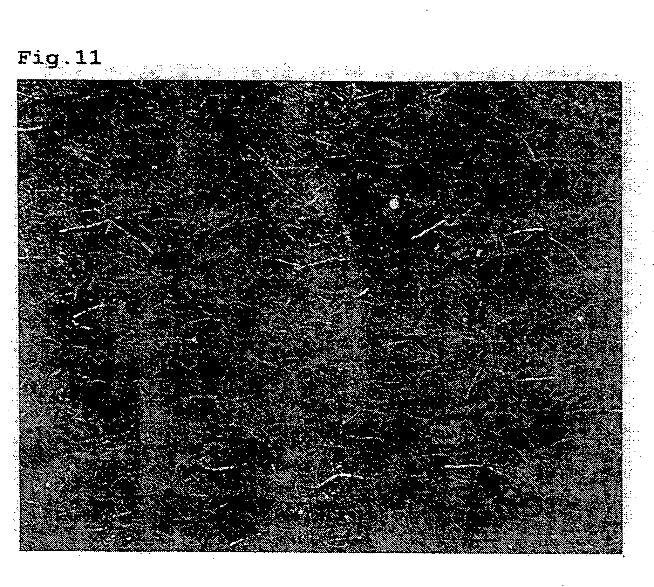

Inalikemanner, an epoxy resin coating film was prepared to have 0.5% by weight of the carbon fiber content in the coating film. An optical microphotograph of the resultant film is shown in Fig. 11. It is clear from this micrograph, the carbon fibers show good dispersability in the resin matrix.
[Table 1]

| Sample | CNT 2% | CNT 5% |
|---|---|---|
| $(\Delta\rho/\rho)_{max}$, at 77 K, 1 T | -1.08 | -1.00 |
| Anisotropy ratio    $\gamma_T$ | 0.96 | 0.89 |
|    $\gamma_T$ | 0.93 | 0.99 |
| Resistance ($\Omega$m), at RT | 0.01 (0.009) | 0.01 (0.013) |
| Resistivity ratio $\rho_{RT}/\rho_{77R}$ | 0.77 | 0.76 |

**INDUSTRIAL UTILITY**

The ultrathin carbon fibers according to the present invention have excellent electron emission ability, electrical conductivity, heat conductivity, and can be used, for example, as semiconductor device, FED, electron microscope element, fuel cells, and in the applications as composite materials, such as electrical conductive fiber, electromagnetic wave shielding material, and housings for various mechanical devices, etc.

**Claims**

1. An ultrathin carbon fiber which comprises a fibrous substance comprising tubular graphene sheets layered in a direction orthogonal to the axis of the ultrathin carbon fiber,
   wherein the tubular graphene sheets include polygonal cross sections in a direction orthogonal to the carbon fiber axis, wherein a maximum diameter of the cross sections is in a range of 15 to 100 nm, an aspect ratio of the ultrathin carbon fiber is not more than $10^5$, and $I_D/I_G$ of the ultrathin carbon fiber as determined by Raman spectroscopy is not more than 0.1.

2. The ultrathin carbon fiber according to claim 1, wherein an anisotropic ratio of magneto resistances of the fiber is not less than 0.85.

3. The ultrathin carbon fiber according to Claims 1 or 2, wherein a magneto resistance of the ultrathin carbon fiber has negative values in a range of magnetic flux density up to 1 Tesla.

4. The ultrathin carbon fiber according to Claim 3, the maximum magneto resistance at 1 Tesla is not more than -0.1%.

5. The ultrathin carbon fiber according to one of Claims 1-4, wherein the ultrathin carbon fiber is prepared by heating a mixture gas of a catalyst and a hydrocarbon at a temperature in the range of 800 - 1300 °C to produce an intermediate, and subjecting the intermediate to treatment in a heating furnace maintained at a temperature in the range of 2400 - 3000 °C while allowing the intermediates to fall down in the furnace to heat and refine the intermediate, without subjecting the intermediate to any compression process.

6. The ultrathin carbon fiber according to Claims 1-4, wherein the ultrathin carbon fiber is prepared by heating a mixture of a catalyst and a hydrocarbon at a temperature in the range of 800 - 1300 °C to produce a first intermediate, subjecting the first intermediate to treatment in a first heating furnace maintained at a temperature in the range of 800 - 1200 °C to heat the first intermediate and transform it into a second intermediate, without subjecting the intermediate to any compression process, and subjecting the second intermediate to treatment in a second heating furnace maintained at a temperature in the range of 2400 -3000 °C while allowing the second intermediates to fall down in the furnace to heat and refine the second intermediate.

7. Method for production of ultrathin carbon fiber, which comprises

- heating a mixture gas of a catalyst and a hydrocarbon at a temperature in the range of 800 - 1300 °C to produce an intermediate, and
- subjecting the intermediate to treatment in a first heating furnace maintained at a temperature in the range of 2400 - 3000 °C while allowing the intermediates to fall down in the furnace to heat and refine the intermediate, without subjecting the intermediate to any compression process,

8. The method according to claim 7 further comprising subjecting the intermediate to treatment in a second heating furnace maintained at a temperature in the range of 800 - 1200 °C, without subjecting the intermediate to any compression process, prior to subjecting the intermediate to treatment in the first heating furnace.

9. The method according to claims 7 or 8, wherein the ultrathin carbon fiber comprises a fibrous substance comprising tubular graphene sheets layered in a direction orthogonal to the axis of the ultrathin carbon fiber, wherein the tubular graphene sheets include polygonal cross sections in a direction orthogonal to the carbon fiber axis, wherein a maximum diameter of the cross sections is in a range of 15 to 100 nm, an aspect ratio of the ultrathin carbon fiber is not more than $10^5$, and $I_D/I_G$ of the ultrathin carbon fiber as determined by Raman spectroscopy is not more than 0.1.

10. The method according to Claims 7 to 9, wherein the catalyst comprises a transition metal compound and sulfur or a sulfur compound.

11. The method according to Claims 8 to 10, wherein a bulk density of the intermediate in the first heating furnace is 5-20 kg/m$^3$.

12. The method according to one of Claims 8-11, wherein the intermediate is heated for 5 - 25 minutes in the first heating furnace.

**Patentansprüche**

1. Ultradünne Kohlenstofffaser, die eine faserige Substanz umfasst, die rohrförmige Graphenschichten umfasst, die in eine zu der Achse der ultradünnen Kohlenstofffaser orthogonalen Richtung geschichtet sind, wobei die rohrförmigen Graphenschichten in einer zu der Kohlenstofffaserachse orthogonalen Richtung polygonale Querschnitte aufweisen, wobei ein Höchstdurchmesser der Querschnitte in einem Bereich von 15 bis 100 nm liegt, ein Seitenverhältnis der ultradünnen Kohlenstofffaser nicht größer als $10^5$ ist und der $I_D/I_G$-Verhältniswert der ultradünnen Kohlenstofffaser bei Bestimmung mittels Raman-Spektroskopie nicht größer als 0,1 ist.

2. Ultradünne Kohlenstofffaser nach Anspruch 1, wobei ein Anisotropieverhältnis des Magnetwiderstands der Faser nicht kleiner als 0,85 ist.

3. Ultradünne Kohlenstofffaser nach Anspruch 1 oder 2, wobei ein Magnetwiderstand der ultradünnen Kohlenstofffaser in einem Bereich der magnetischen Flussdichte von bis zu 1 Tesla negative Werte annimmt.

4. Ultradünne Kohlenstofffaser nach Anspruch 3, wobei der Magnetwiderstand bei 1 Tesla nicht mehr als -0,1 % beträgt.

5. Ultradünne Kohlenstofffaser nach einem der Ansprüche 1-4, wobei die ultradünne Kohlenstofffaser hergestellt wird durch Erhitzen einer Gasmischung bestehend aus einem Katalysator und einem Kohlenwasserstoff bei einer Temperatur im Bereich von 800 - 1300 °C zur Herstellung eines Zwischenprodukts und Behandeln des Zwischenprodukts in einem Heizofen, der bei einer Temperatur im Bereich von 2400 - 3000 °C gehalten wird, während die Zwischenprodukte in den Ofen fallen können, um das Zwischenprodukt zu erhitzen und zu veredeln, ohne das Zwischenprodukt einem Verdichtungsprozess zu unterwerfen.

6. Ultradünne Kohlenstofffaser nach Ansprüchen 1-4, wobei die ultradünne Kohlenstofffaser hergestellt wird durch Erhitzen einer Mischung bestehend aus einem Katalysator und einem Kohlenwasserstoff bei einer Temperatur im Bereich von 800 - 1300 °C zur Herstellung eines ersten Zwischenprodukts, Behandeln des ersten Zwischenprodukts in einem ersten Heizofen, der bei einer Temperatur im Bereich von 800 - 1200 °C gehalten wird, um das erste Zwischenprodukt zu erhitzen und in ein zweites Zwischenprodukt umzuwandeln, ohne das Zwischenprodukt einem Verdichtungsprozess zu unterwerfen, und Behandeln des zweiten Zwischenprodukts in einem zweiten Heizofen, der bei einer Temperatur im Bereich von 2400 - 3000 °C gehalten wird, während die zweiten Zwischenprodukte in den Ofen fallen können, um das zweite Zwischenprodukt zu erhitzen und zu veredeln.

7. Verfahren zur Herstellung einer ultradünnen Kohlenstofffaser, umfassend

- Erhitzen einer Gasmischung bestehend aus einem Katalysator und einem Kohlenwasserstoff bei einer Temperatur im Bereich von 800 - 1300 °C zur Herstellung eines Zwischenprodukts, und
- Behandeln des Zwischenprodukts in einem ersten Heizofen, der bei einer Temperatur im Bereich von 2400 - 3000 °C gehalten wird, während die Zwischenprodukte in den Ofen fallen können, um das Zwischenprodukt zu erhitzen und zu veredeln, ohne das Zwischenprodukt einem Verdichtungsprozess zu unterwerfen.

8. Verfahren nach Anspruch 7, darüber hinaus umfassend das Behandeln des Zwischenprodukts Behandeln des Zwischenprodukts in einem zweiten Heizofen, der bei einer Temperatur im Bereich von 800 - 1200 °C gehalten wird, ohne das Zwischenprodukt einem Verdichtungsprozess zu unterwerfen, bevor das Zwischenprodukt einer Behandlung in dem ersten Heizofen unterzogen wird.

9. Verfahren nach Anspruch 7 oder 8, wobei die ultradünne Kohlenstofffaser eine faserige Substanz umfasst, die rohrförmige Graphenschichten umfasst, die in eine zu der Achse der ultradünnen Kohlenstofffaser orthogonalen Richtung geschichtet sind, wobei die rohrförmigen Graphenschichten in einer zu der Kohlenstofffaserachse orthogonalen Richtung polygonale Querschnitte aufweisen, wobei ein Höchstdurchmesser der Querschnitte im Bereich von 15 bis 100 nm liegt, ein Seitenverhältnis der ultradünnen Kohlenstofffaser nicht größer als $10^5$ ist und der $I_D/I_G$-Verhältniswert der ultradünnen Kohlenstofffaser bei Bestimmung mittels Raman-Spektroskopie nicht größer als 0,1 ist.

10. Verfahren nach Ansprüchen 7 bis 9, wobei der Katalysator eine Übergangsmetallverbindung und Schwefel oder eine Schwefelverbindung umfasst.

11. Verfahren nach Ansprüchen 8 bis 10, wobei eine Schüttdichte des Zwischenprodukts in dem ersten Heizofen 5-20 kg/m$^3$ beträgt.

12. Verfahren nach einem der Ansprüche 8-11, wobei das Zwischenprodukt im ersten Heizofen für eine Dauer von 5 - 25 Minuten erhitzt wird.

**Revendications**

1. Fibre de carbone ultrafine qui comprend une substance fibreuse comprenant des feuilles de graphène tubulaires disposées en couches dans une direction orthogonale à l'axe de la fibre de carbone ultrafine, dans laquelle les feuilles de graphène tubulaires incluent des sections transversales polygonales dans une direction orthogonale à l'axe de la fibre de carbone, dans laquelle un diamètre maximal des sections transversales est compris dans une plage allant de 15 à 100 nm, un rapport d'aspect de la fibre de carbone ultrafine n'est pas supérieur à $10^5$, et l'$I_D/I_G$ de la fibre de carbone ultrafine comme déterminé par spectroscopie Raman n'est pas supérieur à 0,1.

2. Fibre de carbone ultrafine selon la revendication 1, dans laquelle un rapport anisotrope de magnétorésistances de la fibre n'est pas inférieur à 0,85.

3. Fibre de carbone ultrafine selon la revendication 1 ou la revendication 2, dans laquelle une magnétorésistance de la fibre de carbone ultrafine a des valeurs négatives comprises dans une plage de densité de flux magnétique allant jusqu'à 1 Tesla.

4. Fibre de carbone ultrafine selon la revendication 3, dans laquelle la magnétorésistance maximale à 1 Tesla n'est pas supérieure à -0,1 %.

**5.** Fibre de carbone ultrafine selon l'une des revendications 1 à 4, dans laquelle la fibre de carbone ultrafine est préparée en chauffant un mélange gazeux d'un catalyseur et d'un hydrocarbure à une température comprise dans la plage allant de 800 à 1300 °C pour produire un intermédiaire, et en soumettant l'intermédiaire à un traitement dans un four chauffant maintenu à une température comprise dans la plage allant de 2400 à 3000 °C, tout en permettant aux intermédiaires de tomber dans le four pour chauffer et raffiner l'intermédiaire, sans soumettre l'intermédiaire à un quelconque Méthode de compression.

**6.** Fibre de carbone ultrafine selon les revendications 1 à 4, dans laquelle la fibre de carbone ultrafine est préparée en chauffant un mélange d'un catalyseur et d'un hydrocarbure à une température comprise dans la plage allant de 800 à 1300 °C pour produire un premier intermédiaire, en soumettant le premier intermédiaire à un traitement dans un premier four chauffant maintenu à une température comprise dans la plage allant de 800 à 1200 °C pour chauffer le premier intermédiaire et le transformer en un second intermédiaire, sans soumettre l'intermédiaire à un quelconque Méthode de compression, et en soumettant le second intermédiaire à un traitement dans un second four chauffant maintenu à une température comprise dans la plage allant de 2400 à 3000 °C, tout en permettant aux seconds intermédiaires de tomber dans le four pour chauffer et raffiner le second intermédiaire.

**7.** Méthode de production de fibres de carbone ultrafines, qui comprend de

- chauffer un mélange gazeux d'un catalyseur et d'un hydrocarbure à une température comprise dans la plage allant de 800 à 1300 °C pour produire un intermédiaire, et
- soumettre l'intermédiaire à un traitement dans un premier four chauffant maintenu à une température comprise dans la plage allant de 2400 à 3000 °C, tout en permettant aux intermédiaires de tomber dans le four pour chauffer et raffiner l'intermédiaire, sans soumettre l'intermédiaire à un quelconque Méthode de compression.

**8.** Méthode selon la revendication 7, comprenant en outre de soumettre l'intermédiaire à un traitement dans un second four chauffant maintenu à une température comprise dans la plage allant de 800 à 1200 °C, sans soumettre l'intermédiaire à un quelconque Méthode de compression, avant de soumettre l'intermédiaire au traitement dans le premier four chauffant.

**9.** Méthode selon la revendication 7 ou la revendication 8, dans laquelle la fibre de carbone ultrafine comprend une substance fibreuse comprenant des feuilles de graphène tubulaires disposées en couches dans une direction orthogonale à l'axe de la fibre de carbone ultrafine, dans lequel les feuilles de graphène tubulaires incluent des sections transversales polygonales dans une direction orthogonale à l'axe de la fibre de carbone, dans lequel un diamètre maximal des sections transversales est compris dans une plage allant de 15 à 100 nm, un rapport d'aspect de la fibre de carbone ultrafine n'est pas supérieur à $10^5$, et l'$I_D/I_G$ de la fibre de carbone ultrafine comme déterminé par spectroscopie Raman n'est pas supérieur à 0,1.

**10.** Méthode selon les revendications 7 à 9, dans laquelle le catalyseur comprend un composé de métal de transition et du soufre ou un composé à base de soufre.

**11.** Méthode selon les revendications 8 à 10, dans laquelle la densité apparente de l'intermédiaire dans le premier four chauffant est de 5 à 20 kg/m$^3$.

**12.** Méthode selon les revendications 8 à 11, dans laquelle l'intermédiaire est chauffé pendant 5 à 25 minutes dans le premier four chauffant.

Fig.1

Fig.2

Fig.3

×3,000,000

Fig.4

×3,000,000

10 nm

Fig.5

Fig.6

Fig.7

Fig.8

Exaust gas
treatment system

Recovery tank

Intermediate
(First intermediate)

Heater

Reactor

H C

Catalyst

Atmospere
gas

**Fig.9**

Fig.10

Fig.11

**EP 1 731 635 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004099477 A
- WO 2005023937 A
- EP 1275759 A
- EP 1275759 A1
- US 4663230 A
- JP H03174018 A
- US 5165909 A